# EUROPEAN PATENT SPECIFICATION

(11) **EP 3 338 283 B1**
(45) Date of publication and mention of the grant of the patent: **07.10.2020**
(21) Application number: 16838608.4
(22) Date of filing: 22.08.2016
(51) Int. Cl.: G21C 1/02, G01N 21/64, G01N 21/71, G21C 1/30, G21C 17/06, G21C 19/31, G21D 3/08, G01J 3/443, G21C 1/03, G21C 17/025, G21C 17/116, G21C 19/02, G01J 3/02

(54) **METHOD FOR OPERATING A MOLTEN SALT NUCLEAR REACTOR**
VERFAHREN ZUM BETRIEB EINES SALZSCHMELZENKERNREAKTORS
PROCÉDÉ DE FONCTIONNEMENT D'UN RÉACTEUR NUCLÉAIRE À SELS FONDUS

(30) Priority: 23.08.2015 DK 201500492
(43) Date of publication of application: 27.06.2018
(73) Proprietor: Copenhagen Atomics ApS, 2860 Søborg (DK)
(72) Inventor: STEENBERG, Thomas, 4000 Roskilde (DK); BOJE, Peter, 2840 Holte (DK); SZABO, Peter, 3460 Birkerød (DK); TCHERNAYA, Yulia, 2100 København Ø (DK); VOLHA, Belarusava, 1260 København K (DK); PEDERSEN, JAM, Thomas, 2800 Lyngby (DK)
(74) Representative: Nordic Patent Service A/S
(86) International application number: PCT/DK2016/050279
(87) International publication number: WO 2017/032379

(56) References cited:
- FR-A1- 2 733 050
- JP-A- H0 990 086
- JP-A- 2000 321 393
- KR-A- 20120 072 665
- KR-B1- 101 177 285
- US-A- 3 714 014
- US-A- 3 714 014
- US-A- 3 733 130
- US-A- 3 773 615
- US-B2- 6 762 835

## Description

### TECHNICAL FIELD

The disclosure relates to the analysis of the chemical composition of a molten salt in a molten salt nuclear reactor, and to use the information about the chemical compositions for optimization of the chemical composition of the molten salt in order to obtain high neutron efficiency and operate the reactor safely.

### BACKGROUND

In a conventional nuclear reactor, the fuel is typically in the form of solid pellets, which is placed in sealed steel tubes (also called fuel rods). These fuel rods are typically surrounded by cooling water in the reactor. The nuclear processes generate heat (thermal energy), which is transferred to the cooling water. The hot water drives a turbine coupled to a generator and thus converts the thermal energy into electricity. These fuel rods are replaced once a certain fraction of the fuel is burnt in the nuclear reactor.

JP 2000-321393A describes the use of LIBS and LIF for analysis of the cooling water in order to ensure an optimum level of corrosion inhibitors (in particular Li component). This is to ensure low levels of corrosion of the steel tubes. A more efficient operation for control of the cooling water is the result.

A nuclear molten salt reactor is very different form a conventional nuclear reactor. In a molten salt reactor the fuel is dissolved in a chloride or fluoride melt. This melt is then circulated in the reactor. Here the thermal energy from the nuclear processes are removed using a heat exchanger which uses another (typically non-radioactive) molten salt (e.g. a FLiNaK melt). The melt composition with the radioactive fuel has to be monitored in order to be able to operate the reactor safely and to remove fission products (and subsequent decay products) in order to operate the reactor continuously. One will have to stop the reactor and reprocess the melt (i.e. remove fission and decay products) if these fission and decay products are not removed continuously. The present invention solves this need, as it provides a tool for safe and/or continuous operation of the molten salt reactor. Thorium based molten salt reactors (i.e. nuclear reactors where Thorium (Th) is part of the nuclear processes) are typically constructed using steel with high nickel and chromium content. Such construction materials can also be combined with a corrosion resistant coating. Corrosion of such construction materials (or coatings) for the nuclear molten salt reactor reduces the life time of the reactor and increases the risk of leakage of radioactive material to the surroundings. Corrosion can be caused by excess fluorine formed by the ongoing fission processes and subsequent decay processes. The excess fluorine (or high fluorine activity) can be reduced by addition of compounds like UF3, which can react with fluorine and form UF4. This type of corrosion is detected by using LIBS to analyze the melt in the reactor and thus to detect if there is an increased amount of Fe, Ni and Cr and/or coating material in the melt. Another type of corrosion is caused if oxygen (from air) or water enters the melt. This can happen either through leaks or through addition of fuel with such impurities. Both situations are unwanted as the former increases the risk of leakage of radioactive material to the surroundings and both causes corrosion of the construction materials and/or coating used for the nuclear molten salt reactor and thus reduces the life time of the reactor and increases the risk of leakage of radioactive material to the surroundings. This type of corrosion is detected by using LIBS to analyze the melt in the reactor and thus to detect if there is an increased amount of Fe, Ni, Cr and/or coating material and O in the melt. This type of corrosion can be prevented by inspection of the reactor and sealing leaks and/or improve the purity of the fuel. Corrosion due to fluorine activity, leakage and/or oxygen/water from the fuel possess a risk to the safety, as this may cause unexpected failure of the construction materials and/or leakage of radioactive material to the surroundings.

Reprocessing: By reprocessing is meant any action that changes the chemical composition of the melt in the Thorium molten salt reactor in order to improve the neutron efficiency and/or reduces corrosion of the construction materials. Examples of such actions includes (but not limited to) helium bubbling and/or spraying of the molten salt. Both these actions will reduce the content of volatile fission and/or decay products. Even fission and/or decay products with very low vapor pressure at the operating temperature can be removed this way. The reprocessing using helium bubbling and spraying of the salt both works best if the "contact area" between the melt and the gas phase is as large as possible (i.e. smaller bubbles are better than larger ones due to higher surface area for a given volume of helium and similarly smaller melt droplets have higher surface area than larger droplet in case of spraying of the melt). Another example is addition of UF3 to the melt in order to reduce fluorine activity and thus corrosion. Likewise, addition of other metals or compounds that will bind/react stronger with fluorine than the construction materials.

US 3 714 014 discloses a method for the determination of the concentration of certain elements in a molten salt in a molten salt nuclear reactor. These elements are determined by an electrochemical method using a concentration cell. The principle behind this method is to have a compartment with a molten salt having fixed known composition and a known concentration of the component of interest (e.g. BeF2). This compartment is separated from the main molten salt having an unknown concentration of e.g. BeF2. The two molten salts are separated by an ion transfer barrier. A difference in concentration of e.g. BeF2 across this barrier results in an electrical potential difference, which can be measured and correlated to the concentration.

KR 101 177 285 relates to the optimization of the pyro process used for extraction of uranium (U) and transuranium (TRU) from spent nuclear fuel dissolved in a molten salt. According to D2, the pyro process can be optimized by analyzing the remaining elements in the molten salt as uranium (U) and transuranium (TRU) are removed through an electrolytic refining process. The process is monitored through the change (increase) in concentration of remaining compounds (e.g. Tb and Nd). The measuring principle is based on laser fluorescence measurement using a Fluorescence measurement Cell.

US 6 762 835 discloses a method for the analysis of molten glass, alloys or aluminum in a furnace using laser induced breakdowns spectroscopy. The method is used as a process monitor and control tool for the aluminum, glass and steel industry.

US 3 733 130 relates to a probe which can be immersed into a melt. The probe is intended for absorption or colorimetric measurements and cannot be used for laser induced breakdown spectroscopy measurements. Thus, D4 is related to an optical measuring device, which can be used for making colorimetric or absorption spectral measurements in a process stream or sample. The measuring device (or probe) is manufactured in a transparent material, which is immersed into the stream.

There are a number of problems related to molten salt nuclear reactors (including Liquid Fluoride Thorium Reactors) and related reprocessing systems:
The neutron economy is very challenging in this type of reactor (especially in a including Liquid Fluoride Thorium Reactor), meaning that any loss of neutrons (lower neutron efficiency) due to the presence of undesired neutron absorbing elements in the melt should be minimized. The components in the molten salt are radioactive, meaning that they should not be transferred to the external environment for analysis or reprocessing. It is very difficult to analyze for fluorine (both as Fluorine gas and in combination with other elements (like NaF)) using LIBS. Spectroscopic methods using digital cameras cannot be in close proximity to the melt, as radiation will influence the digital camera.

Today no measurement system exists, which can measure all the different isotopes in a molten salt with sufficient high accuracy. As a result, this leads to significantly lower efficiency and safety than could have been achieved if an accurate measurement system had been available.

Analysis of radioactive material from nuclear processes is known from WO 2013/114142 A2, where the information is used to separate unwanted radioactive material from uncontaminated (wanted) materials. However, this method does not solve the problems related to molten salt nuclear reactors or Liquid Fluoride Thorium Reactors.

### SUMMARY

It is an object of the invention to overcome or at least reduce the problems above. The foregoing and other objects are achieved by the features of the independent claims. Further implementation forms are apparent from the dependent claims, the description and the figures.

This invention solves the above problems related to molten salt nuclear reactors and especially Liquid Fluoride Thorium Reactors and related reprocessing systems, by providing a method of analysis of the melt composition, and the use of this information for determining the need for adjustment of melt composition by addition of materials and/or reprocessing of the melt, and thus thereby maintaining a good neutron efficiency without having to remove radioactive material to the external environment for analysis. By reprocessing is mend a process that removes or reduces the undesired neutron absorbing isotopes, radioactive isotopes or corrosive elements, like fission products and/or Actinides and/or Lanthanides from the melt.

The present invention comprises the use of Laser Induced Breakdown Spectroscopy (LIBS) for the analysis of the melt composition in order to determine the content of undesired neutron absorbing isotopes or other undesired elements , and to use this information to determine the need for reprocessing of the melt of the Liquid Fluoride Thorium Reactor. The presence of undesired neutron absorbing elements reduces the neutron efficiency and will need to be removed from the melt in order to operate the molten salt reactor efficiently. A further advantage of the invention is the ability to measure the chemical composition of the melt in-line, meaning that information about the chemical composition can be obtained in real-time without having to take out samples for external analysis.

The neutron efficiency is important as lower efficiency results in less power from the reactor and ultimately the efficiency will be too low to sustain the Thorium cycle in the reactor.

The problem with LIBS in relation to the analysis of Fluor is solved by making a charge balance between positively and negatively charged ions in the fluoride melt. The ratio between certain positively charged elements and/or isotopes in the melt can also be used.

The problem with digital cameras for the recording of the spectrum can be solved by transmitting the light from the plasma to the spectrometer by using an optical fiber. The problem with transfer of radioactive material is solved by the present investigation by being able to perform the analysis without having to transfer a sample of the fluoride melt to the external environment.

According to a first aspect, there is provided a method for operating a molten salt nuclear reactor having a melt of molten salt, comprising determining the chemical composition of the melt and using the information about the chemical composition of the melt to determine the need for adjusting the composition of the melt in order to operate the reactor efficiently, directing a laser beam on the melt or on a sample of the melt and thereby generating plasma on the melt or on the sample of the melt, collecting light from the plasma generated by the laser beam and analyzing the light with a spectrometer to obtain information about the composition of the melt and, using the information about the composition of the melt to optimize the composition of the melt by addition of material to the melt and/or by reprocessing of molten salt from the melt, in order to operate the reactor efficiently.

In a first possible implementation form of the first aspect the molten salt nuclear reactor is a Liquid Fluoride Thorium Reactor.

In a second possible implementation form of the first aspect
comprising performing the chemical analysis on the surface of the melt or on the crust or surface of the melt in the reactor, in a sample or in a reprocessing system.

In a third possible implementation form of the first aspect the melt contains one or more isotopes of Plutonium, Uranium, Thorium, Lithium.

A fourth possible implementation form of the first aspect comprises monitoring the chemical composition of the melt by applying LIBS to the melt or to a sample of the melt.

In a fifth possible implementation form of the first aspect comprising obtaining a sample form the melt and moving the sample in a sealed sample room and thereafter directing the laser on the sample thereby generating plasma.

In a sixth possible implementation form of the first aspect comprising guiding the light from the pulsed laser to the sample surface by an optical fiber or a system of lenses and mirrors, and guiding the light emitted by the plasma to a spectrometer by an optical fiber or a system of lenses and mirrors.

In a seventh possible implementation form of the first aspect comprising measuring salt with small amounts of radioactive isotopes at with LIBS and a radioactivity detection device with one or more time intervals, thereby enhancing the measurement accuracy by using a statistical mathematical model.

In an eighth possible implementation form of the first aspect comprising combining LIBS is combined with several other measurement systems in order to more accurately determine the isotope vector representing the composition of the melt.

A ninth possible implementation form of the first aspect comprises using other measurement systems in order to control and operate the nuclear reactor system safely and optimize the process parameters.

A tenth possible implementation form of the first aspect the method comprises separating one or more samples of the salt are from the main body of salt for an extended period of time and measuring the rate of change in the composition of the samples due to radioactive decay over time and using the measured rate of change in the composition of the samples due to radioactive decay for improving the statistical mathematical model of the composition vector.

In a eleventh possible implementation form of the first aspect the method comprises using a measured value from the combined system to more accurately determine the composition of the body of salt at an earlier point in time, which again can be forward propagated in time using the mathematical model of the system.

According to a second aspect, there is provided a molten salt nuclear reactor comprising a sealed housing containing a melt of molten salt, a pulsed laser configured to emit a laser beam focused on the melt and thereby generate plasma on the melt, the pulsed laser being integrated with the molten salt reactor and/or reprocessing system of the molten salt reactor, and means to expose at least a portion of said melt or of the surface of said melt to said laser beam without having to remove material of said melt from said sealed housing.

In a first possible implementation of the second aspect the molten salt nuclear reactor comprises an optical fiber or a system of lenses and mirrors for guiding the light from the pulsed laser to the surface of the melt or to a sample of the melt, a spectrometer, and an optical fiber or a system of lenses and mirrors for transmitting the light from the plasma generated by the pulsed laser to a spectrometer.

In a second possible implementation of the second aspect the molten salt nuclear reactor comprises a sealed sample chamber that is hermetically associated with said sealed housing.

These and other aspects of the invention will be apparent from and the embodiment(s) described below.

### BRIEF DESCRIPTION OF THE DRAWINGS

In the following detailed portion of the present disclosure, the invention will be explained in more detail with reference to the example embodiments shown in the drawings, in which:
Figure 1 is a diagrammatic rest presentation of a Laser Induced Breakdown Spectroscopy system,
Figure 2a is a diagrammatic representation of a molten salt nuclear reactor according to an example embodiment with a sample rod in a first position,
Figure 2b is a diagrammatic representation of the molten salt nuclear reactor of figure 2a with the sample rod in a second position,
Figure 3a is a diagrammatic representation of a molten salt nuclear reactor according to another example embodiment with a sample retrieval rod in a first position,
Figure 3b is a diagrammatic representation of the molten salt nuclear reactor of figure 3a with the sample rod in a second position,
Figure 4 is a diagrammatic representation of a molten salt nuclear reactor according to yet another example embodiment with a stationary sample rod,
Figure 5 is an elevated view of another embodiment of a sample tube extending from a pipe of a molten salt nuclear reactor,
Figure 6 is a longitudinal sectional view of the sample tube of figure 5
figure 7 is another longitudinal sectional view of the sample tube of figure 5 Figure 8 is yet another embodiment of a sample tube arrangement arranged at a high of a molten salt nuclear reactor,
Figure 9 is a sectional view of the sample tube arrangement of figure 8 with the sample tube in a first position,
Figure 10 is a sectional view of the sample tube arrangement of figure 8 with the sample tube in a second position,
Figure 11 is another sectional view of the sample tube arrangement of figure 8,
Figure 12 is a diagrammatic representation of a system for reducing uncertainty and improving accuracy and
Figure 13 is a diagrammatic representation of a molten salt reactor with indication of examples of integration points of LIBS measurement systems.

### DETAILED DESCRIPTION

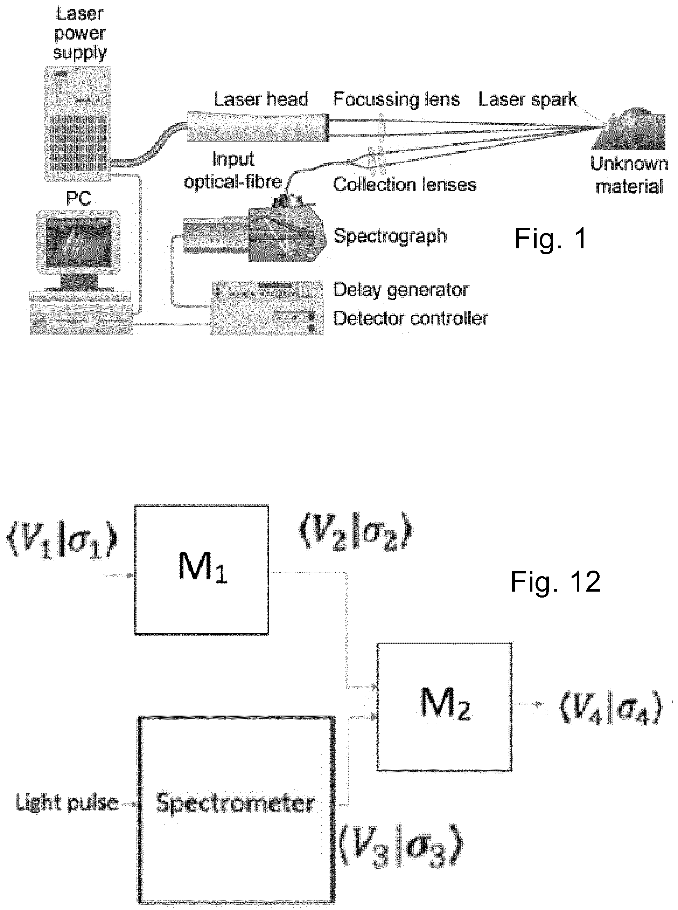

Figure 1 is a diagrammatic illustration of Laser-induced breakdown spectroscopy (LIBS) analysis. LIBS is a type of spectroscopy that uses plasma generated by a laser pulse. The laser is focused on the sample and forms plasma ("laser spark" in Fig. 1), which atomizes and excites samples. LIBS has the capability of analyzing any material regardless of its composition (solid, liquid or gas). When material heats up and forms plasma of sufficient temperature, it emits light at characteristic frequencies (spectrum) that corresponds to the material. LIBS can in principle detect all elements, limited only by the power of the laser and the spectral sensitivity of the spectrometer & detector. The Spectrograph (also called a spectrometer) is used to generate a spectrum based on the light emitted from the plasma formed on the surface of a sample.

Elements of interest in the melt of a molten salt reactor are e.g. Fe, Cr, Ni, O, C, Li, Th, U, He, Pa, Np, Pu, Xe, Sr, Cs, Mo, Ba, Kr, Ce, Te, Y, Rb, Nd, La, Be, B, V, Mn, Co, Cu, Am, Zr. Further, elevenths of interest are Pr, Ru, Nb, Sb, Tc, Se, Sn and Sm.

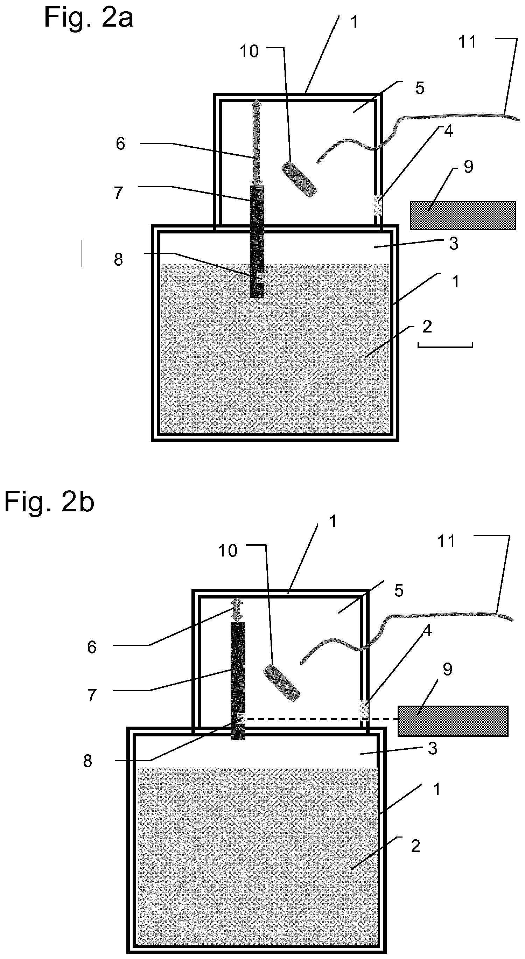

Figures 2A and 2B show an example embodiment of an apparatus of for performing a LIBS analysis on a sample from the melt in a Liquid Fluoride Thorium Reactor. The molten salt in a molten salt nuclear reactor including the Liquid Fluoride Thorium Reactor is typically a fluoride melt containing LiF and/or NaF and/or BeF2. The melt may also contain other elements in order to optimize properties like melting point, corrosion, viscosity or thermal conductivity. Fluoride salts of Thorium and/or Uranium and/or spend nuclear fuel and/or Plutonium is dissolved in the melt. Alternatively, the molten salt nuclear reactor can also be based on chloride salts.

A rod 7 with a small cavity with a melt sample 8 can be withdrawn by a mechanical device 6 from the melt 2 into a sample chamber 5. Here a laser 9 is focused on the sample 8 to generate a plasma and the light from the plasma is collected by an optical device 10 and focused onto an optical fiber 11, which transmits the light to a spectrometer (not shown in figure 2) for the LIBS analysis. The casing 1 separates the molten salt 2 in the Liquid Fluoride Thorium Reactor from the external environment. The area outside the casing is regarded as the external environment. There may be a gas volume 3 present in the reactor and the rod 7 will have a sufficient length to reach the melt. Figure 2A shows the rod submerged in the melt and Figure 2B shows the rod 7 withdrawn from the melt 2 and the laser 9 sending laser pulses (illustrated by the dotted line) towards the sample 8. The laser pulses enter the sample chamber 5 though an optical device 4 (window) that enables the laser pulses to enter while preventing radioactive material and/or radiation to escape the sample chamber 1. An alternative implementation is to position the laser inside the sample chamber 5. The sample chamber 5 may be pressurized with inert gas e.g. Helium in order to prevent gasses from the reactor 3 to enter the sample chamber 5 and/or there may be a mechanical blockage of the opening between the gas 3 and the sample chamber 5 here illustrated by the rod 7 blocking the opening. A new sample can 8 be obtained by immersing the cavity into the melt, which will then re-melt the sample and thus ensure that the melt in the cavity is representative for the general melt 2.

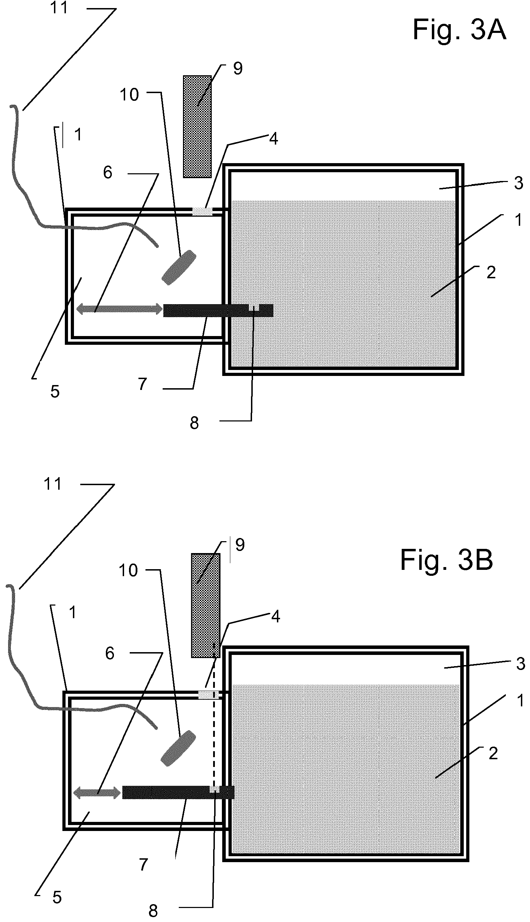

Figures 3A and 3B are similar to Figures 2A and 2B, except that here there does not need to be any gas 3 between the sample chamber 5 and the melt 2. Here a rod 7 with a small cavity with a melt sample 8 can be withdrawn by a mechanical device 6 (linear actuator) from the melt 2 into a sample chamber 5. Here a laser 9 is focused on the sample 8 to generate a plasma and the light from the plasma is collected by an optical device 10 and focused onto an optical fiber 11, which transmit the light to a spectrometer not shown on figure 3 for the LIBS analysis. The casing 1 separates the molten salt 2 in the Liquid Fluoride Thorium Reactor from the external environment. The area outside the casing 1 is regarded as the external environment. There may be a gas volume 3 present in the reactor but in this embodiment the rod 7 will move directly into the melt 2, i.e. without passing through a gas volume. Figure 3A shows the rod 7 submerged in the melt 2 and Figure 3B shows the rod 7 withdrawn from the melt and the laser 9 sending laser pulses towards the sample 8 illustrated by the dotted line. The laser pulses enters the sample chamber 5 though an optical device 4 (window) that enables the laser pulses to enter while preventing radioactive material to escape the sample chamber 5. An alternative implementation is to position the laser 9 inside the sample chamber 5. The sample chamber 5 may be pressurized with inert gas e.g. Helium in order to prevent melt from the reactor 3 to enter the sample chamber 5 and/or there may be a mechanical blockage of the opening between the melt to and the sample chamber 8 here illustrated by the rod 7 blocking the opening. A new sample can be obtained by immersing the cavity into the melt 2, which will then re-melt the sample and thus ensure that the melt in the cavity is representative for the general melt 2.

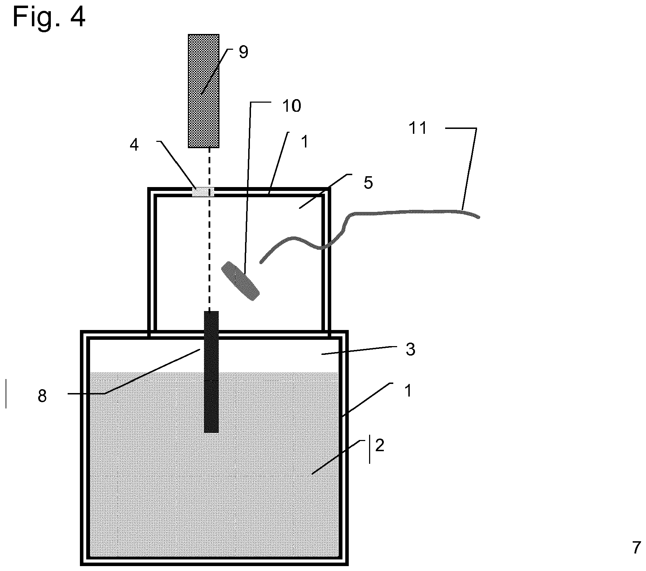

Figure 4 shows another example embodiment for performing a LIBS analysis directly on the surface of the melt 2. Here a hollow tube 8 connects the sample chamber 5 with the melt 2. The height of the melt surface in the hollow tube 8 can be controlled by regulating the pressure in the sample chamber 5. The hollow tube 8 may also have a mechanical lid, not shown on Figure 4 that can be closed when not performing a LIBS analysis. This reduces heat and radiation into the sample chamber 5. The LIBS analysis is performed by having a laser 9 focused on the surface of the melt inside the tube 8 to generate a plasma and the light from the plasma is collected by an optical device 10 (lens) and focused onto an optical fiber 11, which transmits the light to a spectrometer (not shown in Figure 4). The casing 1 separates the molten salt 2 in the Liquid Fluoride Thorium Reactor from the external environment. The area outside the casing 1 is regarded as the external environment. There may or may not be a gas volume 3 present at the interface between the reactor and the sample chamber, but here the tube 8 will be in direct contact with the melt 2. The dimensions of the tube 8 are chosen in such a way that it is possible to control the position of the melt to by regulating the pressure in the sample chamber 5. The laser 9 sending laser pulses towards the sample illustrated by the dotted line. The laser pulses enter the sample chamber 5 though an optical device 4 (window) that enables the laser pulses to enter while preventing radioactive material to escape the sample chamber 5. An alternative implementation is to position the laser 9 inside the sample chamber 5. The sample chamber 5 may be pressurized with inert gas e.g. helium in order to prevent melt and/or gases from the reactor 3 to enter the sample chamber 5.

Example 1. This example describes how to perform a chemical analysis of a sample using LIBS. The LIBS analysis consists of focusing a laser pulse on a sample surface where it generates a plasma. The laser can either be directed directly towards the sample or the laser pulse can be guided to a focusing lens by means of an optical fiber. The light from the plasma is collected using lenses and/or mirrors and is transmitted to the spectrometer either directly or through an optical fiber. The spectrometer generates a spectrum, which can be analyzed in a computer (such as e.g. a PC). The timing of the measurement is controlled by the computer and/or a delay generator. See Figure 1 for an example of a setup for LIBS measurements. The LIBS method can be used for chemical analysis of both solid and molten samples. There exists a number of manufactures of suitable spectrometers. Examples of spectrometers are the Aryelle™ and Demon™ spectrometers from LTB™ (Berlin). There are a number of manufactures for suitable lasers for example the CFR laser from Quantel™.

Furthermore, it can be very difficult to perform an accurate chemical analysis of the element Fluorine. The amount (or concentration) is not determined directly but instead calculated from the charge balance between cations and anions detected in the melt.

Example 2. This example describes examples of the setup for LIBS analysis in a Liquid Fluoride Thorium Reactor. The nuclear reactor consists of a closed system, which contains the molten salt. The system consists of the nuclear reactor itself and in some cases also a re-processing system where undesired elements are removed from the melt. The information about the chemical composition is used to determine if new fuel should be added and/or undesired components should be removed. It is often undesirable to take melt samples to the external working environment (e.g. outside the closed system) as the melt is radioactive. The use of optical fibers for transmitting the light from the plasma allows for the position of the spectrometer outside the closed system, meaning that it can be accessed for service, calibration, etc. Furthermore, the DIGITAL CAMERA used for recording the spectrum is shielded from the exposure to radiation, which could cause problems (e.g. saturation of the DIGITAL CAMERA). The laser used for the generation of the plasma can be placed in the external working environment and the laser pulse can be guided to the sample surface by means of an optical fiber or through an optical path, both ways prevent radioactive material to be transferred to the external environment and can be designed so that very little radiation can pass to the external environment. The laser can also be placed inside the closed system and have direct line of sight to the surface of the sample. Figures 2, 3 and 4 show embodiments of how to implement a setup for LIBS analysis of the melt composition in a Liquid Fluoride Thorium Reactor and/or in the reprocessing system.

Example 3, analysis of the melt composition in the reprocessing system is obtained by forming a plasma on the surface of the aerosol by using a setup similar to that illustrated on Figure 4, where the melt surface is replaced with the surface of the aerosol.

Example 4: In order to obtain information about the various isotopes the chemical composition of a sample is measured over time (e.g. one to two hours or longer). The decay of radioactive isotopes will result in a change in the chemical composition of the sample and one this change in composition over time is used to calculate the ratio of one or more of the isotopes present in the melt.

Example 5: In order to obtain information about the various isotopes a high resolution spectrometer is used in the setup illustrated in Figure 1. This allows to measure the ratio between two isotopes of an element in the melt. An example of this is to use a spectrometer which have a resolving power sufficient to separate the peaks from two or more isotopes (e.g. to separate the peaks of Uranium-235 and Uranium-238).

Example 6: LIBS is be combined with other analysis methods in order to obtain information about the various isotopes and/or increase the accuracy of the chemical analysis. Examples of such other analysis methods includes xrf (x-ray fluorescence) spectroscopy, gamma spectroscopy and IR (infrared) spectroscopy.

Example 7: The information of the chemical composition obtained by LIBS is correlated to the radioactive decay of the various elements in the melt, and thus be used to determine the ratio between the isotopes of interest. Examples are isotopes of Thorium, Uranium and Plutonium.

Example 8: Some LIBS systems can measure some elements more accurately than other elements. However, in a system with radioactive isotopes, then the decay of the isotopes can be used to greatly improve the accuracy of the combined measurement system. A sample is measured with one or more timely intervals using both LIBS and a radiation detection device. Then, by measuring approximately how many radioactive isotopes have decayed to another element, this combination of information about decay, radiation energy and measurements from the LIBS system. The software calculates with high statistically accuracy how much of an isotope was in the sample before and after the decay. Having this information available during the operation of a nuclear system, can greatly improve the safety and optimize process parameters, leading to a very significant economic gain.

Example 9: The amount or change in radioactivity can be measured very accurately with contemporary instruments today. Likewise, most radioactive decay processes are well understood and documented in public literature. Thus, by studying the amount of radiation from a sample and the rate of change of the radiation over time a statistical model of which isotopes are in the sample is obtained. When combined with LIBS, which allows determining the amount of a given element or rate of change of an element over time, this greatly improves the accuracy of the statistical model and thus helps to determine which isotopes are in a sample. By combining this data with other measurement systems and prior knowledge about system startup and operation conditions, this results in a system which far exceeds measurement capabilities of contemporary systems used today. In nuclear reactions it is normal that more than 1000 distinct isotopes are generated in the melt. Many of these will decay to other isotopes within seconds and thus the composition of the system can be represented as a vector of hundreds or thousands of isotopes where each number in the vector represents the amount of material in a sample or confinement. One or more other vector represents the accuracy of the amount value for each isotope in the first vector. A computer system with a mathematical model of the decay process and operation model of the system, will at timely intervals, for example every second, calculate the statistically model and determine how each value in the vectors change over time. Feedback from the measurement system where LIBS and other measurement devices are combined, help to further improve the accuracy of the computer calculated statistical model of the vector values.

Example 10: A measurement system combined with a statistical mathematical model like the one described in the previous examples, can also be updated with measurement data, which is not collected in real time but collected for example hours, months or years later and then these measurement results help determine more accurately, what the amount value or uncertainty value was at a given point in time earlier. This improves accuracy of the vectors earlier in time can then using mathematical calculations be projected forward in time to the present time and used to update the accuracy of the vectors at the current time. Because the radioactive decay data are very well know and because radioactivity can be detected with high accuracy and because the radioactive decay cause atoms to change from one element to another over time provides a unique opportunity to combine it with LIBS measurements and obtain highly accurate information about what a sample or containment holds.

In an embodiment a LIBS spectrometer is used with sufficient band width for a quantitative chemical analysis of the melt and a sufficient resolving power that enables quantification of relevant isotopes of Thorium, Uranium and Plutonium, and where the interface to the Reactor and/or related reprocessing system is shown in Figure 2A and 2B. The information about the chemical composition is used for optimization of the melt composition by reprocessing and/or addition of additional material to the reactor. The preferred type of the molten salt nuclear reactor is a Liquid Fluoride Thorium Reactor.

According to an embodiment the method for operating a molten salt nuclear reactor, comprises determining the chemical composition of the molten salt and using the information about the chemical composition to determine the need for adjusting the composition of the melt in order to operate the reactor efficiently.

In an embodiment that the chemical composition of the melt is monitored by the use of Laser Induced Breakdown Spectroscopy and, the information about the composition of the melt is used to optimize the melt composition by addition of material and/or determining the need for reprocessing of the melt, in order to operate the reactor most efficiently.

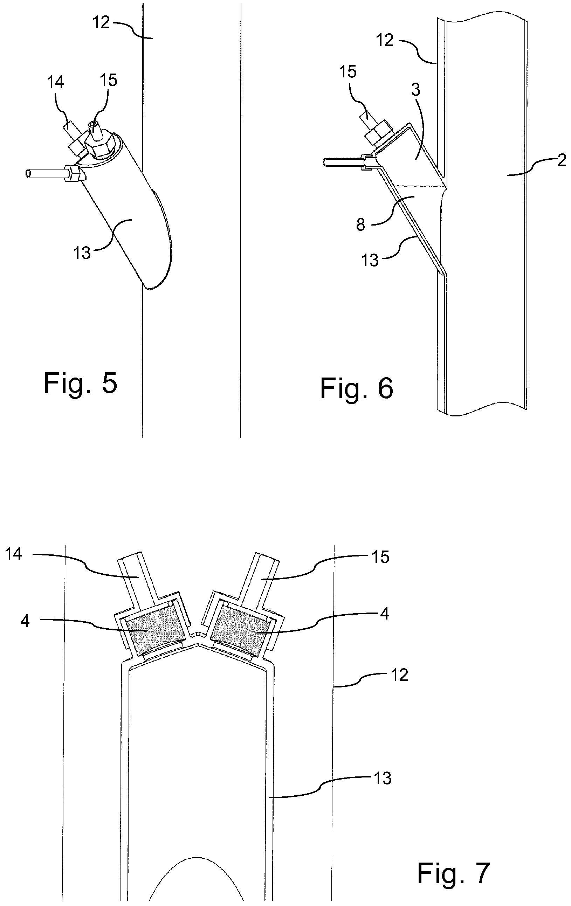

Figures. 5 to 7 illustrate an example embodiment of a sample tube 13 that is squinty and upwardly extending from a pipe 12 that holds or transports the melt 2 of the molten salt nuclear reactor. The upper section of the sample tube 13 is preferably filled with gas. At the upper end of the sampling tube 13 are provided two windows 4. The two windows 4 are received in a suitable receptacle and each window 4 is provided with connection studs 14,15 that serve to connect to the pulse laser and to the LIBS spectrometer, respectively.

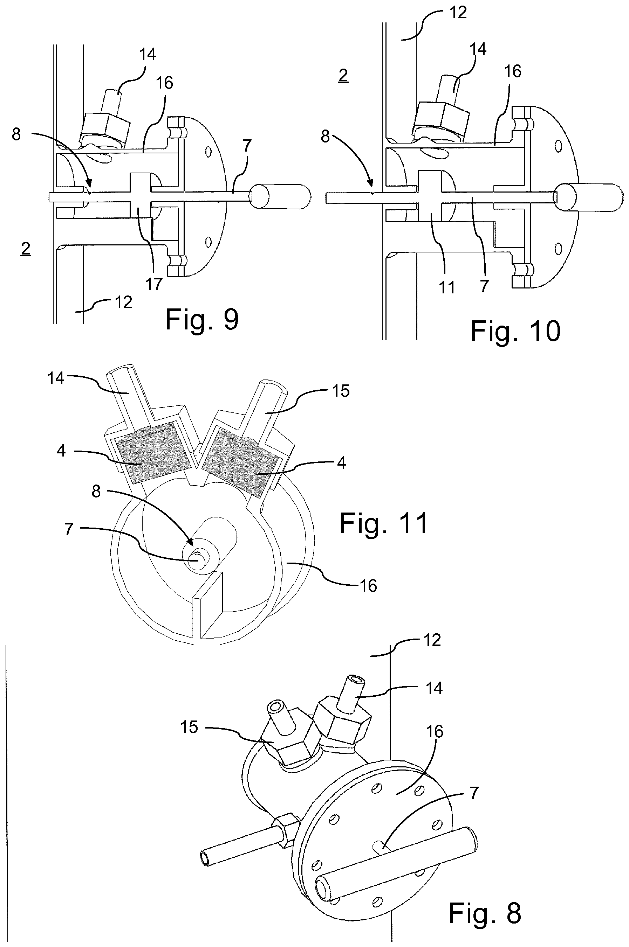

Figures. 8 to 11 illustrate an example embodiment of a sample rod 7 that is slidably supported by a sampling arrangement. The sampling arrangement comprises a cylindrical casing 16 that allows the sample rod 7 to be moved between an extended position shown in figure 10 and a retracted position shown in figure 9. A mechanical end stop in the form of the large diameter disk 17 is rigidly secured to the sample rod 7. A recess 8 for receiving a sample is provided in the sample rod 7. A portion of the sample rod 7 protrudes from the cylindrical casing 16 in any position of the sample rod 7. In the retracted position of figure 9 the recess 8 for receiving the sample is positioned inside the cylindrical casing 16 and aligned with a pair of windows 4 for being exposed to LIBS. In the extended position of the sample rod 7 the recess 8 is positioned inside the melt 2 in the pipe 12 for taking in a new sample of the melt 2. The two windows 4 are received in a suitable receptacle of the sampling arrangement and each window 4 is provided with a connection stud 14,15 that serves to connect to the pulse laser and the LIBS spectrometer, respectively.

Figure 12 is a diagrammatic representation of a system for improving reducing uncertainty and improving accuracy. V1 and uncertainty σ1 are vectors with n elements which each describe the amount of a certain isotope in the body of salt and the uncertainty of each of these amount values. M1 is a model that propagate this forward or backward in time, taking into account the statistical radioactive decay of each of the isotopes in the input vector V1. This generates an output V2 and uncertainty σ2 which is then fed into a model M2 which also take the input vector V3 which is the output of the spectrometer. The spectrometer output may also have an uncertainty σ3 vector M2 combined statistical methods with what is termed the calibration data into an output vector V4 and uncertainty σ4 which is then the output of the LIBS measurement system as a whole used to determine the amount of each isotope in the vector V4 present in the body of salt. V4 and σ4 are fed back into system as V1 and σ1 in the next iteration of the measurement. Over time this uncertainty is reduced, and a more and more accurate output vector is created, the output vector describing the amounts of each isotope present in the salt. M2 may be advanced further to not only take into account the radioactive decay but also other nuclear interactions such as neutron capture and nuclide fission.

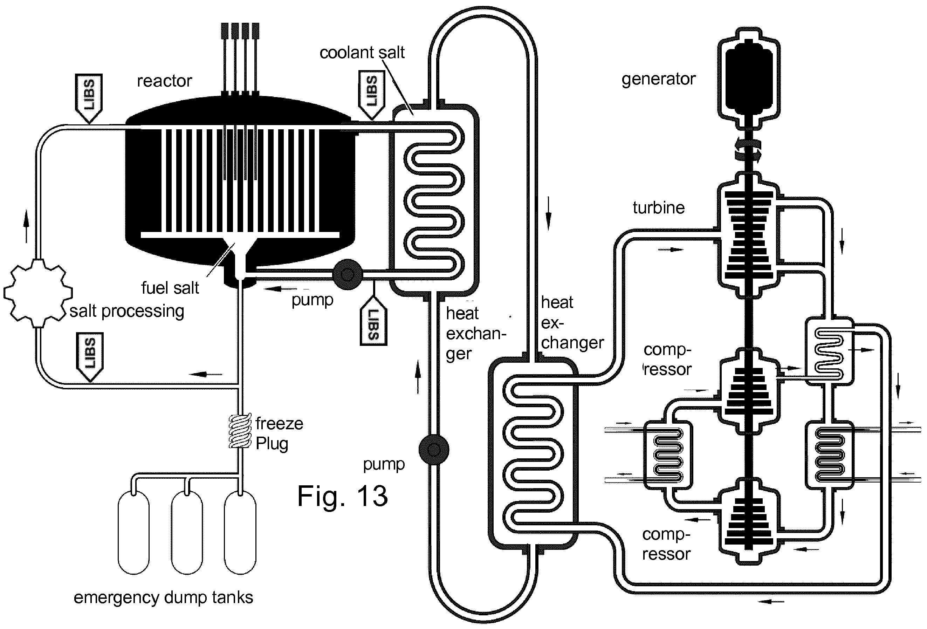

Figure 13 is a diagrammatic representation of a molten salt reactor with indication of examples of integration points of LIBS measurement systems. Figure 13 represents a Liquid Fluoride Thorium Reactor. The reactor core 1 is connected with pipes 4 to the heat exchangers 2 showing a typical integration point of the LIBS measurement components 3 on these pipes. The same set of pipes or other pipes may connect the reactor core 1 with the salt reprocessing system 5 also showing typical integration points of the LIBS measurement components 3.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method for operating a molten salt nuclear reactor having a melt of molten salt, comprising:
determining the chemical composition of the melt (2) and using the information about the chemical composition of the melt (2) to determine the need for adjusting the composition of the melt (2) in order to operate the reactor efficiently,
**characterized by**
directing a laser beam on the melt or on a sample of the melt and thereby generating plasma on the melt or on the sample of the melt,
collecting light emitted from the plasma generated by the laser beam and analyzing the light with a spectrometer to obtain information about the composition of the melt (2) and,
using the information about the composition of the melt (2) to optimize the composition of the melt by addition of material to the melt and/or by reprocessing of molten salt from the melt (2), in order to operate the reactor efficiently and/or safely.

2. A method according to the proceeding claim, where the molten salt nuclear reactor is a Liquid Fluoride Thorium Reactor.

3. A method according to any one of the proceeding claims, comprising performing the chemical analysis on the surface of the melt or on the crust or surface of the melt (2) in the reactor, in a sample or in a reprocessing system.

4. A method according to any one of the proceeding claims, wherein the melt (2) contains one or more isotopes of Plutonium, Uranium, Thorium, Lithium and other minor Actinides.

5. A method according to any one of the preceding claims, comprising monitoring the chemical composition of the melt (2) by applying Laser Induced Breakdown Spectroscopy, LIBS, to the melt (2) or to a sample of the melt.

6. A method according to any one of the preceding claims, comprising obtaining a sample from the melt (2) and moving the sample in a sealed sample room and thereafter directing the laser on the sample thereby generating plasma.

7. A method according to any one of the preceding claims, comprising guiding the light from the pulsed laser to the sample surface by an optical fiber (11) or a system of lenses (10) and mirrors, and guiding the light emitted by the plasma to a spectrometer by an optical fiber (11) or a system of lenses (10) and mirrors.

8. A method according to any one of the proceeding claims, wherein determining the chemical composition comprises measuring salt with small amounts of radioactive isotopes with LIBS and a radioactivity detection device with one or more time intervals, thereby enhancing the measurement accuracy by using a statistical mathematical model.

9. A method according to any one of the preceding claims, comprising using other measurement systems in order to control and operate the nuclear reactor system safely and optimize the process parameters.

10. A method according to the proceeding claims, comprising separating one or more samples of the molten salt from the main body of salt (2) for an extended period of time and measuring the rate of change in the composition of the samples due to radioactive decay over time and using the measured rate of change in the composition of the samples due to radioactive decay for improving the statistical mathematical model of a composition vector.

11. A molten salt nuclear reactor comprising:
- a sealed housing containing a melt (2) of molten salt,
**characterized by**
- a pulsed laser configured to emit a laser beam focused on said melt and thereby generate plasma on said melt (2),
- said pulsed laser being integrated with the molten salt reactor and/or reprocessing system of the molten salt reactor, and
- means to expose at least a portion of said melt (2) or of the surface of said melt (2) to said laser beam without having to remove material of said melt from said sealed housing.

12. The molten salt nuclear reactor according to claim 11, comprising: an optical fiber (11) or a system of lenses (10) and mirrors for guiding the light from the pulsed laser to the surface of the melt (2) or to a sample of the melt (2), a spectrometer, and an optical fiber (11) or a system of lenses (10) and mirrors for transmitting the light from the plasma generated by the pulsed laser to a spectrometer.

13. The molten salt reactor according to claim 11 or 12, comprising a sealed sample chamber (5) that is hermetically associated with said sealed housing.

## Patentansprüche

1. Verfahren zum Betreiben eines Flüssigsalz-Kernreaktors, der eine Schmelze aus geschmolzenem Salz aufweist, umfassend:
Bestimmen der chemischen Zusammensetzung der Schmelze (2) und Benutzen der Informationen über die chemische Zusammensetzung der Schmelze (2), um die Notwendigkeit der Anpassung der Zusammensetzung der Schmelze (2) zu bestimmen, um den Reaktor effizient zu betreiben,
**gekennzeichnet durch**
Richten eines Laserstrahls auf die Schmelze oder auf eine Probe der Schmelze und dadurch Erzeugen von Plasma auf der Schmelze oder auf der Probe der Schmelze,
Sammeln von Licht, das von dem Plasma emittiert wird, das durch den Laserstrahl erzeugt wird, und Analysieren des Lichtes mit einem Spektrometer, um Informationen über die Zusammensetzung der Schmelze (2) zu erhalten, und
Benutzen der Informationen über die Zusammensetzung der Schmelze (2), um die Zusammensetzung der Schmelze durch Zusetzen von Material zu der Schmelze und/oder durch Aufbereiten von geschmolzenem Salz von der Schmelze (2) zu optimieren, um den Reaktor effizient und/oder sicher zu betreiben.

2. Verfahren nach dem vorhergehenden Anspruch, wobei der Flüssigsalz-Kernreaktor ein Flüssigfluorid-Thorium-Reaktor ist.

3. Verfahren nach einem der vorhergehenden Ansprüche, umfassend das Durchführen der chemischen Analyse an der Oberfläche der Schmelze oder an der Kruste oder der Oberfläche der Schmelze (2) in dem Reaktor, in einer Probe oder in einem Aufbereitungssystem.

4. Verfahren nach einem der vorhergehenden Ansprüche, wobei die Schmelze (2) ein oder mehrere Isotope von Plutonium, Uran, Thorium, Lithium und anderen minoren Actiniden enthält.

5. Verfahren nach einem der vorhergehenden Ansprüche, umfassend das Überwachen der chemischen Zusammensetzung der Schmelze (2) durch Anwenden von laserinduzierter Plasmaspektroskopie, LIBS, auf die Schmelze (2) oder auf eine Probe der Schmelze.

6. Verfahren nach einem der vorhergehenden Ansprüche, umfassend das Erhalten einer Probe von der Schmelze (2) und Befördern der Probe in einem abgedichteten Probenraum und danach Richten des Lasers auf die Probe, wodurch Plasma erzeugt wird.

7. Verfahren nach einem der vorhergehenden Ansprüche, umfassend das Leiten des Lichtes vom gepulsten Laser zur Probenoberfläche durch eine Lichtleitfaser (11) oder ein System von Linsen (10) und Spiegeln und Leiten des Lichtes, das von dem Plasma emittiert wird, durch eine Lichtleitfaser (11) oder ein System von Linsen (10) und Spiegeln zu einem Spektrometer.

8. Verfahren nach einem der vorhergehenden Ansprüche, wobei das Bestimmen der chemischen Zusammensetzung das Messen von Salz mit kleinen Mengen radioaktiver Isotope mit LIBS und einer Vorrichtung zum Detektieren von Radioaktivität mit einem oder mehreren Zeitintervallen umfasst, wodurch die Messgenauigkeit durch Benutzen eines statistisch-mathematischen Modells erhöht wird.

9. Verfahren nach einem der vorhergehenden Ansprüche, umfassend das Benutzen anderer Messsysteme, um das Kernreaktorsystem zu kontrollieren und sicher zu betreiben und die Prozessparameter zu optimieren.

10. Verfahren nach den vorhergehenden Ansprüchen, umfassend das Trennen einer oder mehrerer Proben des geschmolzenen Salzes von dem Hauptkörper von Salz (2) für eine verlängerte Zeitdauer und Messen der Geschwindigkeit der Änderung in der Zusammensetzung der Proben aufgrund von radioaktivem Zerfall im Zeitverlauf und Benutzen der gemessenen Geschwindigkeit der Änderung in der Zusammensetzung der Proben aufgrund von radioaktivem Zerfall zum Verbessern des statistisch-mathematischen Modells eines Zusammensetzungsvektors.

11. Flüssigsalz-Kernreaktor, umfassend:
- ein abgedichtetes Gehäuse, das eine Schmelze (2) aus geschmolzenem Salz enthält,
**gekennzeichnet durch**
- einen gepulsten Laser, der ausgestaltet ist, um einen Laserstrahl zu emittieren, der auf die Schmelze fokussiert wird und dadurch Plasma auf der Schmelze (2) erzeugt,
- dass der gepulste Laser in den Flüssigsalzreaktor und/oder das Aufbereitungssystem des Flüssigsalzreaktors eingebunden ist und
- Mittel, um mindestens einen Anteil der Schmelze (2) oder der Oberfläche der Schmelze (2) dem Laserstrahl auszusetzen, ohne Material der Schmelze aus dem abgedichteten Gehäuse entfernen zu müssen.

12. Flüssigsalz-Kernreaktor nach Anspruch 11, umfassend: eine Lichtleitfaser (11) oder ein System von Linsen (10) und Spiegeln zum Leiten des Lichtes vom gepulsten Laser zur Oberfläche der Schmelze (2) oder einer Probe der Schmelze (2), ein Spektrometer und eine Lichtleitfaser (11) oder ein System von Linsen (10) und Spiegeln zum Weiterleiten des Lichtes von dem Plasma, das durch den gepulsten Laser erzeugt wird, zu einem Spektrometer.

13. Flüssigsalz-Kernreaktor nach Anspruch 11 oder 12, umfassend eine abgedichtete Probenkammer (5), die mit dem abgedichteten Gehäuse hermetisch verbunden ist.

## Revendications

1. Procédé de fonctionnement d'un réacteur nucléaire à sel fondu ayant une masse fondue de sel fondu, comprenant :
la détermination de la composition chimique de la masse fondue (2) et l'utilisation des informations l'utilisation des informations concernant la composition chimique de la masse fondue (2) afin de déterminer la nécessité d'ajuster la composition de la masse fondue (2) de façon à faire fonctionner le réacteur de manière efficace,
**caractérisé par**
la direction d'un faisceau laser sur la masse fondue ou sur un échantillon de la masse fondue et permettant ainsi de générer du plasma sur la masse fondue ou sur l'échantillon de la masse fondue,
la collecte de lumière émise provenant du plasma généré par le faisceau laser et l'analyse de la lumière à l'aide d'un spectromètre afin d'obtenir des informations concernant la composition de la masse fondue (2) et,
l'utilisation des informations concernant la composition de la masse fondue (2) afin d'optimiser la composition de la masse fondue par l'ajout de matériau à la masse fondue et/ou par retraitement du sel fondu provenant de la masse fondue (2), de façon à faire fonctionner le réacteur de manière efficace et/ou sûre.

2. Procédé selon la revendication précédente, dans lequel le réacteur nucléaire à sel fondu est un Réacteur Thorium à Fluorure Liquide.

3. Procédé selon l'une quelconque des revendications précédentes, comprenant la réalisation de l'analyse chimique sur la surface de la masse fondue ou sur la croûte ou la surface de la masse fondue (2) dans le réacteur, dans un échantillon ou dans un système de retraitement.

4. Procédé selon l'une quelconque des revendications précédentes, dans lequel la masse fondue (2) contient un ou plusieurs isotopes de Plutonium, d'Uranium, de Thorium, de Lithium et d'autres Actinides mineurs.

5. Procédé selon l'une quelconque des revendications précédentes, comprenant la surveillance de la composition chimique de la masse fondue (2) par l'application de la spectroscopie par claquage induit par éclair laser sur la masse fondue (2) ou sur un échantillon de la masse fondue.

6. Procédé selon l'une quelconque des revendications précédentes, comprenant l'obtention d'un échantillon provenant de la masse fondue (2) et le déplacement de l'échantillon dans une chambre d'échantillon étanche et ensuite la direction du laser sur l'échantillon permettant ainsi de générer du plasma.

7. Procédé selon l'une quelconque des revendications précédentes, comprenant le guidage de la lumière provenant du laser pulsé vers la surface échantillon au moyen d'une fibre optique (11) ou d'un système de lentilles (10) et de miroirs, et le guidage de la lumière émise par le plasma vers un spectromètre moyen d'une optique (11) ou d'un système de lentilles (10) et de miroirs.

8. Procédé selon l'une quelconque des revendications précédentes, dans lequel la détermination de la composition chimique comprend la mesure du sel avec de petites quantités d'isotopes radioactifs avec la LIBS et un dispositif de détection de radioactivité avec un ou plusieurs intervalles temporaires, permettant ainsi d'améliorer la précision de mesure par l'utilisation d'un modèle mathématique statistique.

9. Procédé selon l'une quelconque des revendications précédentes, comprenant l'utilisation d'autres systèmes de mesure de façon à contrôler et faire fonctionner le système de réacteur nucléaire de manière sûre et optimiser les paramètres de procédé.

10. Procédé selon l'une quelconque des revendications précédentes, comprenant la séparation d'un ou de plusieurs échantillons du sel fondu provenant du corps principal de sel (2) pendant une période de temps prolongée et la mesure du taux de changement de la composition des échantillons en raison de la désintégration radioactive au fil du temps et l'utilisation du taux de changement mesuré dans la composition des échantillons en raison de la désintégration radioactive destinée à l'amélioration du modèle mathématique statistique du vecteur de composition.

11. Réacteur nucléaire à sel fondu comprenant :
- un boîtier étanche contenant une masse fondue (2) de sel fondu,
**caractérisé par**
- un laser pulsé conçu pour émettre un faisceau laser focalisé sur ladite masse fondue et pour ainsi générer du plasma sur ladite masse fondue (2),
- ledit laser pulsé étant intégré au réacteur à sel fondu et/ou au système de retraitement du réacteur à sel fondu, et
- un moyen permettant d'exposer au moins une partie de ladite masse fondue (2) ou de la surface de ladite masse fondue (2) audit faisceau laser sans avoir à éliminer un matériau de ladite masse fondue provenant dudit boîtier étanche.

12. Réacteur nucléaire à sel fondu selon la revendication 11, comprenant : une fibre optique (11) ou un système de lentilles (10) et de miroirs destiné au guidage de la lumière provenant du laser pulsé sur la surface de la masse fondue (2) ou sur un échantillon de la masse fondue (2), un spectromètre, et une fibre optique (11) ou un système de lentilles (10) et de miroirs destiné à la transmission de la lumière provenant du plasma généré par le laser pulsé à un spectromètre.

13. Réacteur nucléaire à sel fondu selon la revendication 11 ou la revendication 12, comprenant une chambre d'échantillon étanche (5) qui est associée de manière hermétique avec ledit boîtier étanche.
